(19)

**Europäisches Patentamt**
**European Patent Office**
**Office européen des brevets**

(11) **EP 1 865 657 A1**

(12) **EUROPEAN PATENT APPLICATION**

(43) Date of publication:
**12.12.2007 Bulletin 2007/50**

(51) Int Cl.:
***H04L 9/08*** (2006.01)

(21) Application number: **07252321.0**

(22) Date of filing: **08.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **09.06.2006 JP 2006161443**

(71) Applicant: **Kabushiki Kaisha Toshiba Minato-ku, Tokyo 105-8001 (JP)**

(72) Inventor: **Furuta, Kenichiro c/o IP Div. Toshiba Corp.**
**Tokyo 105-8001 (JP)**

(74) Representative: **Maury, Richard Philip**
**Marks & Clerk**
**90 Long Acre**
**London WC2E 9RA (GB)**

(54) **Quantum communciation system, quantum repeater apparatus, quantum repeater method, and computer program product**

(57) A quantum repeater apparatus performs an entanglement swapping (ES) process for sharing an EPR pair with another node, and performs an entanglement purification protocol (EPP) process with the node with which the EPR pair is shared. The quantum repeater apparatus selects, when performing a last EPP process, a classical channel different from at least one of a classical channel used for a last ES process and used for any one of ES processes that have been performed before the last ES process, and a classical channel used for any one of EPP processes that have been performed before.

FIG.2

**Description**

CROSS-REFERENCE TO RELATED APPLICATIONS

This application is based upon and claims the benefit of priority from the prior Japanese Patent Application No. 2006-161443, filed on Jun. 9, 2006; the entire contents of which are incorporated herein by reference.

BACKGROUND OF THE INVENTION

1. Field of the Invention

The present invention relates to a quantum communication system, a quantum repeater apparatus, a quantum repeater method, and a computer program product for performing long-distance quantum communication among plural parties using a quantum repeater technology.

2. Description of the Related Art

To ensure security in quantum key distribution proposed as a strong cryptographic primitive, it is necessary to make strength of a transmitted signal sufficiently low. Although a week signal can ensure a high security, a quantum state is easily attenuated in a short communication distance. Because the signal in a quantum state cannot be duplicated without a correct observational basis, it is impossible to recover the attenuated signal by reading and regenerating the signal. Thus, it is extremely difficult to amplify the signal in a quantum state. To solve the problem, quantum repeater technology has been proposed.

The quantum repeater technology is for transmitting the signal in a quantum state to a remote location with a high fidelity. By repeating two operations, i.e., an entanglement swapping (ES) for extending a length of an entangled photon pair (i.e., an Einstein-Podolsky-Rosen (EPR) pair) and an entanglement purification protocol (EPP) for recovering the fidelity of the EPR pair, the length of the EPR pair can be extended gradually while the fidelity is maintained. The fidelity is an index that indicates to what extent a quantum state after attenuation is approximate to a quantum state before attenuation.

More particularly, the quantum repeater protocol proceeds as follows. Firstly, an EPR pair is generated at each of repeater stations, and a photon, which is one of photons of the EPR pair, is transmitted to an adjacent repeater station. Thereby, the EPR pair is shared by the repeater stations adjacent to each other. Then, the EPR pair is connected by the ES. The fidelity becomes lower by the operation for sharing the EPR pair by the repeater stations adjacent to each other and the ES operation. The lowered fidelity is recovered by the EPP. The ES and the EPP are repeated until the EPR pair is shared by a transmitter and a receiver. As a result, the EPR pair is shared by the transmitter and the receiver, and the signal in a quantum state is transmitted to a remote location with the high fidelity. Such a quantum repeater protocol is disclosed, for example, in an article "Quantum repeaters: The role of imperfect local operations in quantum communication" written by H.J. Briegel et al., in Phys. Rev. Lett., Vol. 81, No. 26, pages 5932 to 5935, 1998.

However, there are problems in the above quantum repeater technology. A classical communication is used in the quantum repeater protocol, and the EPR pair is stored in a quantum memory at the repeater station during classical communication. Because the fidelity of the quantum state of the EPR pair stored in the quantum memory is attenuated over time, the longer the EPR pair is stored in the quantum memory, the lower the fidelity of the EPR pair becomes. Consequently, to enhance the fidelity of the shared EPR pair, it is necessary to minimize a period of the classical communication.

In addition, a quantum repeater used for the quantum-information repeating includes a small-scaled quantum computer and a quantum memory. The quantum computer and the quantum memory are more expensive than an optical fiber for classical channels and an amplifier for classical signals. If quantum repeaters are installed in all paths where the classical channels exist, costs for building such a network increase significantly. Therefore, it is expected that quantum channels where the quantum repeaters are installed are scattered more thinly than classical channels are. As a result, some paths for quantum channels can be longer than correspondent shortest paths for classical channels. This makes it difficult to ensure the security of the signal as described above.

SUMMARY OF THE INVENTION

According to one aspect of the present invention, a quantum communication system includes plural quantum repeater apparatuses each serving as a node positioned in one of a classical channel and a quantum channel between a transmitter node and a receiver node. Each of the apparatuses includes an EPR-pair generating unit that generates an EPR (Einstein-Podolsky-Rosen) pair which is an entangled photon pair; a photon transmitting unit that transmits one of photons of the EPR pair to an adjacent node to share the EPR pair with the adjacent node and extend a distance between photons of the EPR pair; an entanglement swapping unit that performs an entanglement swapping process for increasing the length of the EPR pair; and an entanglement purification protocol unit that performs an entanglement purification protocol process for recovering fidelity of the EPR pair, wherein the entanglement purification protocol unit selects, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

Further, according to another aspect of the present invention, a quantum repeater apparatus serving as a node positioned in one of a classical channel and a quantum channel between a transmitter node and a receiver node, the apparatus includes an EPR-pair generating unit that generates an EPR (Einstein-Podolsky-Rosen) pair which is an entangled photon pair; a photon transmitting unit that transmits one of photons of the EPR pair to an adjacent node to share the EPR pair with the adjacent node and extend a distance between photons of the EPR pair; an entanglement swapping unit that performs an entanglement swapping process for increasing the length of the EPR pair; and an entanglement purification protocol unit that performs an entanglement purification protocol process for recovering fidelity of the EPR pair, wherein the entanglement purification protocol unit selects, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

Still further, according to still another aspect of the present invention, method for performing quantum repeater process. The method includes generating an EPR (Einstein-Podolsky-Rosen) pair which is an entangled photon pair; transmitting one of photons of the EPR pair to an adjacent node to sharing the EPR pair with the adjacent node and extend a distance between photons in the EPR pair; performing an entanglement swapping process for increasing the length of the EPR pair; and performing an entanglement purification protocol for recovering fidelity of the EPR pair, wherein the performing the entanglement purification protocol includes selecting, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

Still further, according to still another aspect of the present invention, a computer program product causes a computer to perform the method according to the present invention.

BRIEF DESCRIPTION OF THE DRAWINGS

Fig. 1 is a functional block diagram of a network structure of a quantum communication system according to a first embodiment of the present invention;
Fig. 2 is a functional block diagram of a repeater shown in Fig. 1;
Fig. 3 is a functional block diagram of a photon-to-solid EIT quantum computer shown in Fig. 2;
Fig. 4 is a schematic diagram for explaining an example of states of EPR pairs in an ES process and an EPP process;
Fig. 5 is a schematic diagram for explaining the ES process;
Fig. 6 is a schematic diagram for explaining the EPP process;
Figs. 7A to 9C are schematic diagrams for explaining photon states from generation of an EPR pair to the EPP process;
Fig. 10 is a schematic diagram for explaining an example of a network structure in which quantum channels are partially overlapped with classical channels;
Fig. 11 is a flowchart of a quantum communication process;
Fig. 12 is a schematic diagram for explaining an example of a network made up of a block of network in which quantum channels are perfectly overlapped with classical channels and another block of a network in which quantum channels are partially overlapped with classical channels;
Fig. 13 is a functional block diagram of a network structure of a quantum communication system according to a second embodiment of the present invention;
Fig. 14 is a functional block diagram of a network management device shown in Fig. 13;
Fig. 15 is a schematic diagram for explaining an example of a data format of an IP address;
Fig. 16 is a schematic diagram for explaining a case in which the IP address is made of four segments;
Fig. 17 is a table for explaining an example of a path table;
Fig. 18 is a schematic diagram for explaining an example of a path taken in a quantum communication process as a result of path determination according to the second embodiment; and

Fig. 19 is a functional block diagram of a modification of a quantum- repeater apparatus that can determine a path.

DETAILED DESCRIPTION OF THE INVENTION

Exemplary embodiments of the present invention are described in detail below with reference to the accompanying drawings.

In the conventional quantum communication system, a path for connecting quantum repeater apparatuses from a transmitter to a receiver perfectly overlaps with classical channels over all segments However, when the classical communication can be made via a path shorter than the path for connecting quantum repeater apparatuses, a quantum communication system according to a first embodiment of the present invention selects the shorter path for the classical communication to realize the communication via the shorter path.

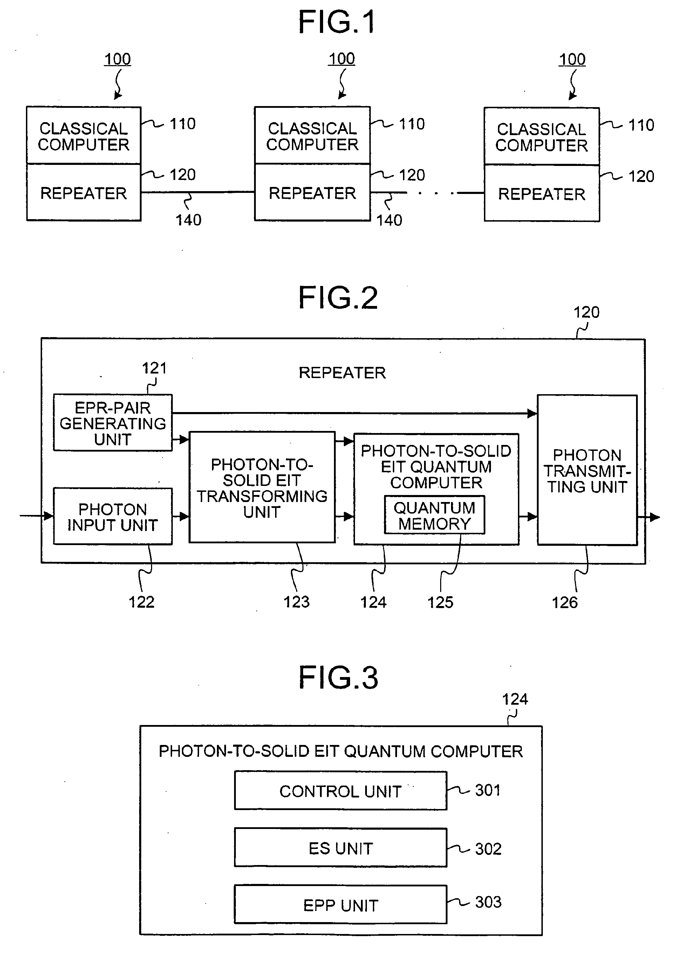

As shown in Fig. 1, the quantum communication system includes a plurality of quantum repeater apparatuses 100 connected to each other via an optical fiber 140. Such a network built over the optical fiber 140 includes both classical channels and quantum channels.

The quantum repeater apparatuses 100 are positioned in a classical channel or a quantum channel from a transmitter node to a receiver node, and pass along quantum information on a photon from the transmitter node to the receiver node. The quantum repeater apparatuses 100 can act as the transmitter node and the receiver node.

Each of the quantum repeater apparatuses 100 includes a classical computer 110 for control (hereinafter, "classical computer") and a repeater 120. The classical computer 110 controls its own quantum repeater apparatus 100 and includes a central processing unit (CPU) and a memory, as an ordinary computer includes.

The repeater 120, as shown in Fig. 2, includes an EPR-pair generating unit 121, a photon input unit 122, a photon-to-solid EIT transforming unit 123, a photon-to-solid EIT quantum computer 124 that includes a quantum memory 125 inside, and a photon transmitting unit 126 as main units.

The EPR-pair generating unit 121 generates an EPR pair. Any device that generates a photon pair can be used as the EPR-pair generating unit 121. The EPR pair is a pair of entangled photons. An entanglement level of the photon pair reaches its maximum when the photon pair is in a Bell state. The Bell state is four states expressed by following Equations (1) to (4). A measurement in the Bell basis on the two photons is called a joint Bell measurement.

$$\left|\phi^{+}\right\rangle = (|0\rangle|0\rangle + |1\rangle|1\rangle)/\sqrt{2} \tag{1}$$

$$\left|\phi^{-}\right\rangle = (|0\rangle|0\rangle - |1\rangle|1\rangle)/\sqrt{2} \tag{2}$$

$$\left|\psi^{+}\right\rangle = (|0\rangle|1\rangle + |1\rangle|0\rangle)/\sqrt{2} \tag{3}$$

$$\left|\psi^{-}\right\rangle = (|0\rangle|1\rangle - |1\rangle|0\rangle)/\sqrt{2} \tag{4}$$

where |0> indicates a state of photon polarized at 0 degree,

|1> indicates a state of photon polarized at 90 degrees,

(1√2) (|0>+|1>) indicates a state of photon polarized at 45 degrees, and

(1√2) (|0>-|1>) indicates a state of photon polarized at 135 degrees.

The device that generates a pair of photons is described in detail in a technical article "A semiconductor source of triggered entangled photon pairs" written by R. M. Stevenson, R. J. Young, P. Atkinson, K. Cooper, D. A. Ritchie, and A. J. Shields, in Nature, Vol. 439, pages 179 to 182, 2006.

The photon transmitting unit 126 transmits a photon, which is one of photons of the generated EPR pair, to one of the quantum repeater apparatuses 100 which is a node adjacent to its own quantum repeater apparatus 100.

The photon input unit 122 receives a photon, which is one of photons of the EPR pair, from one of the quantum repeater apparatuses 100 which is a node adjacent to its own quantum repeater apparatus 100.

The photon-to-solid EIT transforming unit 123 transforms a quantum state of the received photon and a quantum state of the photon of the EPR pair generated by its own EPR-pair generating unit 121 into a quantum state of nuclear spin, more particularly, a quantum state of nuclear spin of rare-earth ions (such as praseodymium ion ($Pr^{3+}$)) scattered in an oxide crystal (such as yttrium silicate ($Y_2SiO_5$)), and outputs the transformed quantum state to the photon-to-solid EIT quantum computer 124.

The photon-to-solid EIT quantum computer 124 performs quantum computation for the quantum state of the photon transformed into the quantum state of nuclear spin by using electromagnetically induced transparency (EIT) in a solid medium. The EIT in a solid medium is a phenomenon induced by operating two lights at three energy levels. When the EIT occurs, a naturally opaque material turns transparent against one of or both of the lights, and two energy levels among the above three are in a quantum-mechanical superposition state. Details of the quantum computer are described in technical articles "A simple frequency-domain quantum computer with ions in a crystal coupled to a cavity mode" written by K. Ichimura, in Optics communications, 196, pages 119 to 125, 2001, and "Multiqubit controlled unitary gate by adiabatic passage with an optical cavity" written by H. Goto and K. Ichimura, in Phys. Rev. A, Vol. 70, p. 012305, 2004.

The photon-to-solid EIT quantum computer 124 performs an entanglement swapping process and an entanglement purification protocol process.

The photon-to-solid EIT quantum computer 124, as shown in Fig. 3, includes a control unit 301, an entanglement swapping unit (ES unit) 302, and an entanglement purification protocol unit (EPP unit) 303 as main units.

The ES unit 302 performs the entanglement swapping process (ES process) for increasing the length of an EPR pair with one of the quantum repeater apparatuses 100 which is an adjacent node. Among a plurality of EPR pairs, a photon (a particle), which is one of photons of each EPR pair, is swapped in the ES process.

The EPP unit 303 performs the entanglement purification protocol process (EPP process) for recovering fidelity of the EPR pairs that are shared by the quantum repeater apparatuses 100 as a result of the ES process. The EPP process is for generating an EPR pair with high fidelity from a plurality of EPR pairs with low fidelity. The ES process and the EPP process are performed in the quantum repeater process.

The EPP has different variations. Details of such variations are described in technical articles "Purification of noisy entanglement and faithful teleportation via noisy channels" written by C. H. Bennett et al., in Phys. Rev. Lett., Vol. 76, No. 5, pages 722 to 725, 1996, "Conversion of a general quantum stabilizer code to an entanglement distillation protocol" written by R. Matsumoto, in quant-ph/0209091, 2002; and "Simple proof of security of the BB84 quantum key distribution protocol" written by P. W. Shor and J. Preskill, in e-print, quant-ph/003004, 2000.

After a path from the transmitter node to the receiver node is determined, the control unit 301 determines a role of its own quantum repeater apparatus 100 based on a position of its own node in the path. The role is described in detail later.

A generalized quantum repeater protocol is described below. The generalized quantum repeater protocol has a quantum-state distributing step and an EPR-pair extending step. The quantum-state distributing step is for sharing the entangled photon pair in a short distance. The EPR-pair extending step is for extending a distance of particle pair shared in a short distance. At the EPR-pair extending step, information is transmitted not via quantum channels but via classical channels.

At the EPR-pair extending step and the quantum-state distributing step according to the first embodiment, when the EPR-pair extending step is broken down into a plurality of sub-steps, a classical channel that is used at the last substep is different from at least one of classical channels that have been used at prior sub-steps. A manner of the channel selection is described in detail in a part for the EPP process and the ES process described later.

A quantum repeater process using the ES process and the EPP process is described below. Here, L is the number of photon pairs connected at the same time at a single ES process, $N=L^n$, and N-1 numbers of nodes $C_1$, $C_2$, ..., $C_{N-1}$ are connected via an optical fiber connecting a transmitter node A to a receiver node B. Each of the nodes $C_1$, $C_2$, ..., $C_{N-1}$, the transmitter node A, and the receiver node B is the quantum repeater apparatus 100, and includes the quantum memory 125 for storing the photon, a single-qubit circuit, and a two-qubit circuit.

An EPR pair is shared by nodes adjacent to each other. More particularly, each of the nodes generates the EPR pair, and transmits a photon, which is one of photons of the EPR pair, to an adjacent node positioned at the receiver node B side.

Then, L numbers of the EPR pairs are connected as follows in a fist ES process.

All of the nodes other than the nodes $C_L$, $C_{2L}$, ..., $C_{N-L}$, perform the ES process, and connect the EPR pairs. As a result, N/L numbers of EPR pairs with an L length are generated, and shared by the nodes A and $C_L$, $C_L$ and $C_{2L}$, ..., respectively.

Although the fidelity of the EPR pairs lowers by the ES process, if the fidelity is higher than a lower limit of a recoverable fidelity range of the EPP process, the fidelity can be recovered by the EPP process. A first EPP process is performed to recover the fidelity.

A second ES process is performed after the first EPP process. In the second ES process, L numbers of the EPR pairs with the L length generated at the first ES process are connected.

All of the nodes $C_{kL}$ (k=1, 2, ...) other than the nodes $C_{L^2}$, $C_{2(L^2)}$, ..., $C_{N-(L^2)}$ connect the EPR pairs by the ES process. As a result, $N/L^2$ numbers of EPR pairs with an $L^2$ length are generated, and shared by the nodes A and $C_{L^2}$, $C_{L^2}$ and $C_{2(L^2)}$, ..., respectively. The fidelity of the EPR pairs is recovered by a second EPP process.

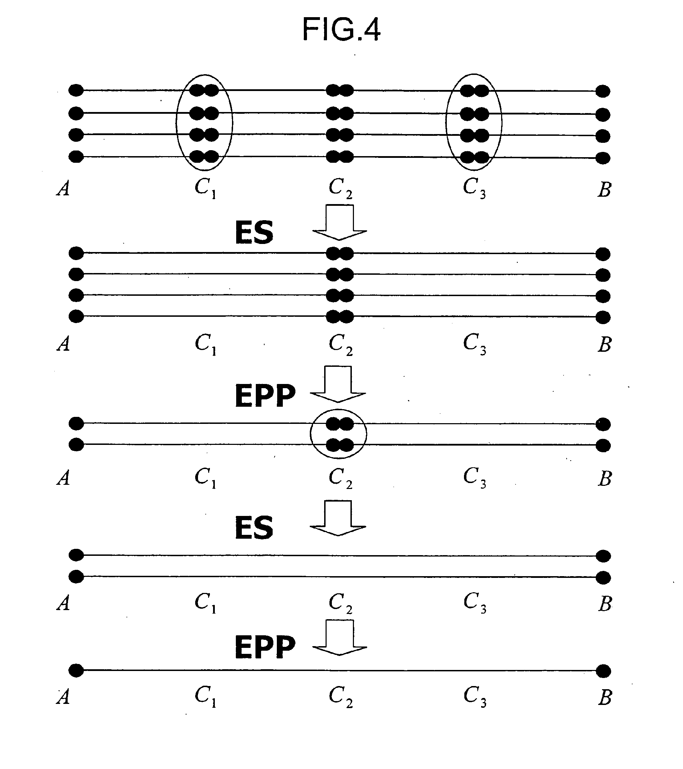

After n sets of the ES process and the EPP process are repeated, an EPR pair with high fidelity is shared by the transmitter node A and the receiver node B. Thus, it is possible to keep the fidelity of the shared EPR pair constant, even when a distance of the EPR pair is extended. Fig. 4 is a schematic diagram for explaining states of the EPR pairs in the ES process and the EPP process in case of N=4. In Figs. 4 to 9, two photons connected by a solid line indicate an entangled photon pair.

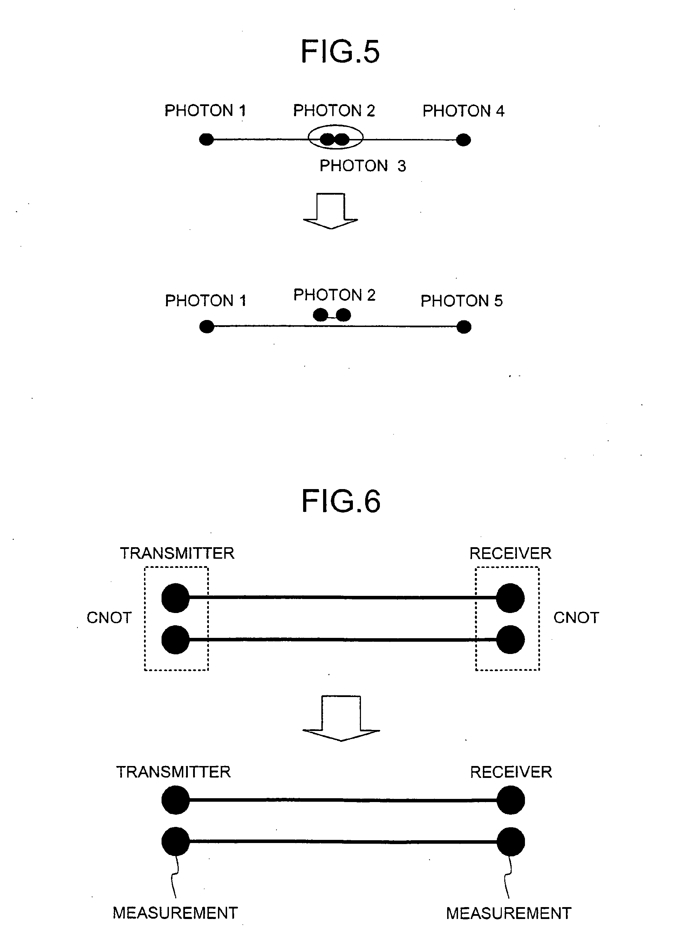

Details of the ES process are described below. As shown in Fig. 5, when the ES process is performed for an EPR pair of photons 1 and 2 and another EPR pair of photons 3 and 4, the two EPR pairs are transformed into an EPR pair of photons 1 and 4 and another EPR pair of photons 2 and 3. Assume that there are two nodes $C_1$ and $C_2$ between the transmitter node A and the receiver node B. The ES process for coupling an EPR pair shared by the nodes A and $C_1$ with another EPR pair shared by the nodes $C_1$ and B is performed as follows.

A joint Bell measurement is performed for a $C_1$-sided photon of the EPR pair shared by the nodes A and $C_1$ and a $C_1$-sided photon of the EPR pair shared by the nodes $C_1$ and B. The photon transmitting unit 126 transmits a result of the joint Bell measurement to the transmitter node A and the receiver node B by using the classical communication. The transmitter node A and the receiver node B compute in a manner corresponding to the result.

Details of the EPP process are described below. In an example shown in Fig. 6, the EPP process is performed for two EPR pairs shared by the transmitter node A and the receiver node B.

Each of the transmitter node A and the receiver node B transforms two photons of itself by performing a random bilateral operation. The transmitter node A performs a control NOT (CNOT) for the two photons at the transmitter node A, which are photons of the two EPR pairs shared by the transmitter node A and the receiver node B. Similarly, the transmitter B performs a CNOT for the other two photons at the transmitter node B. A qubit that is a target of one of the CNOTs at the transmitter node A and the receiver node B is observed, and a result of the observation at the transmitter node A is transmitted to the receiver node B via a classical channel. The receiver node B compares the result of the observation at the transmitter node A with a result of the observation at the receiver node B, and performs an operation corresponding to a result of the comparison. Thereby, the EPP process is performed, and the fidelity of the EPR pairs is recovered.

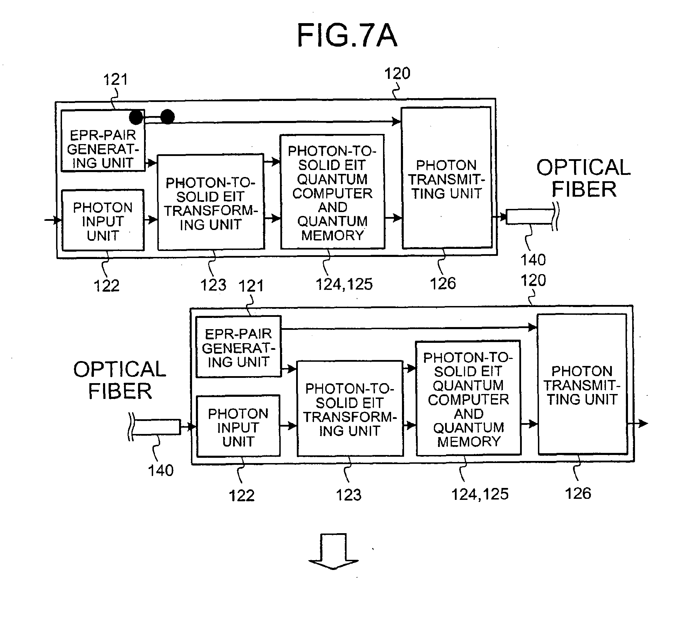

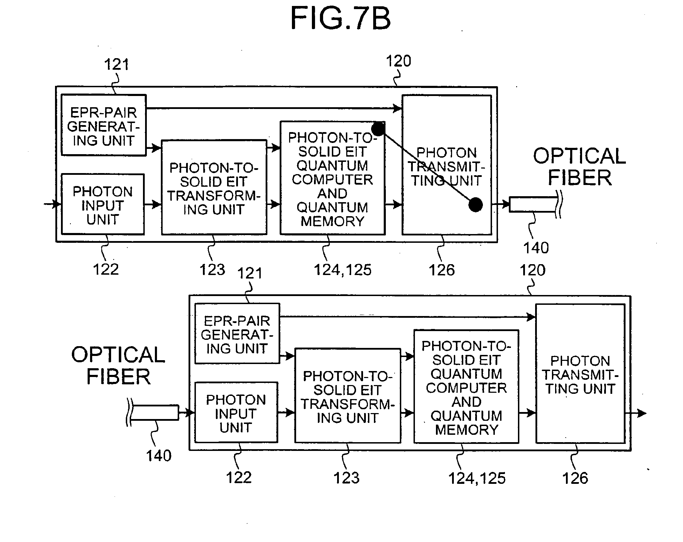

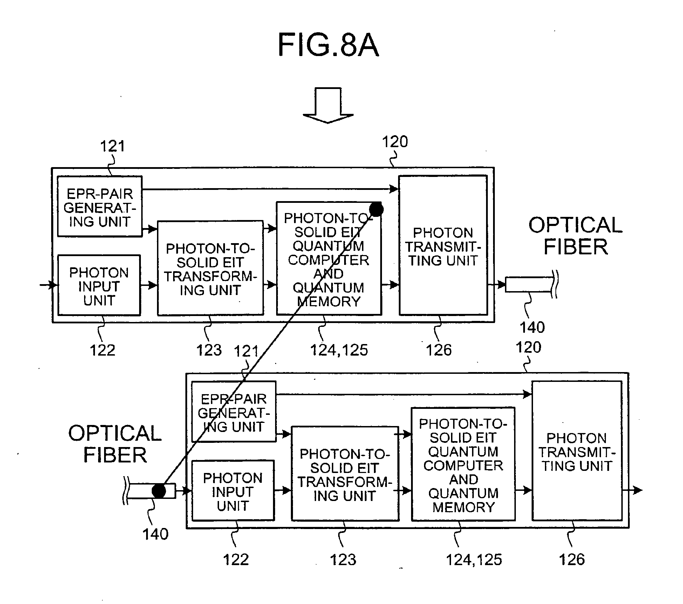

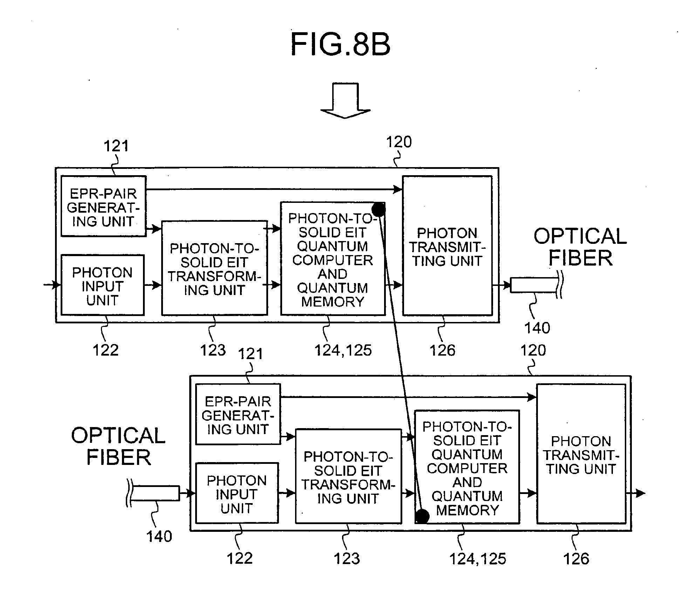

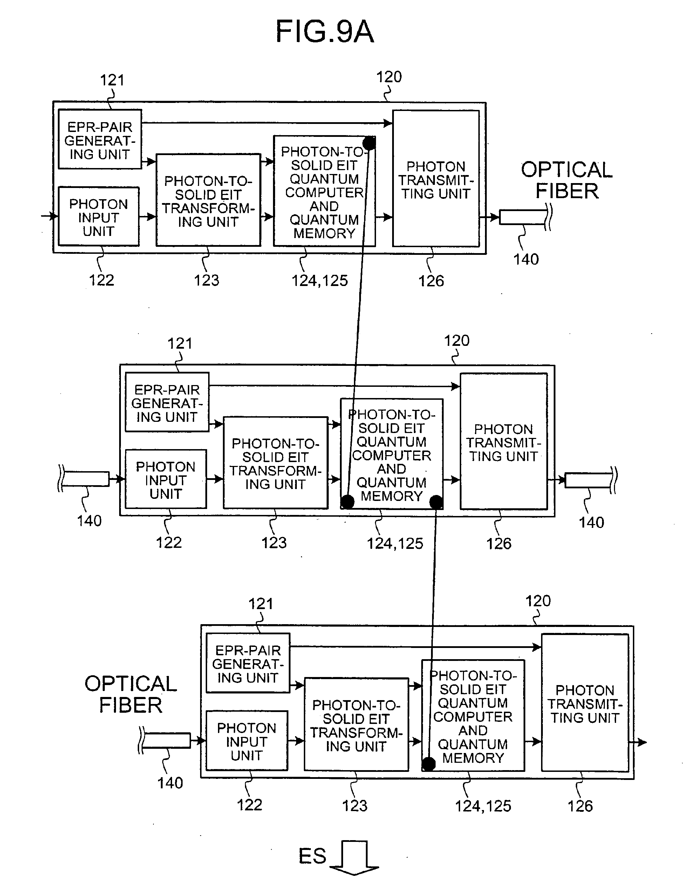

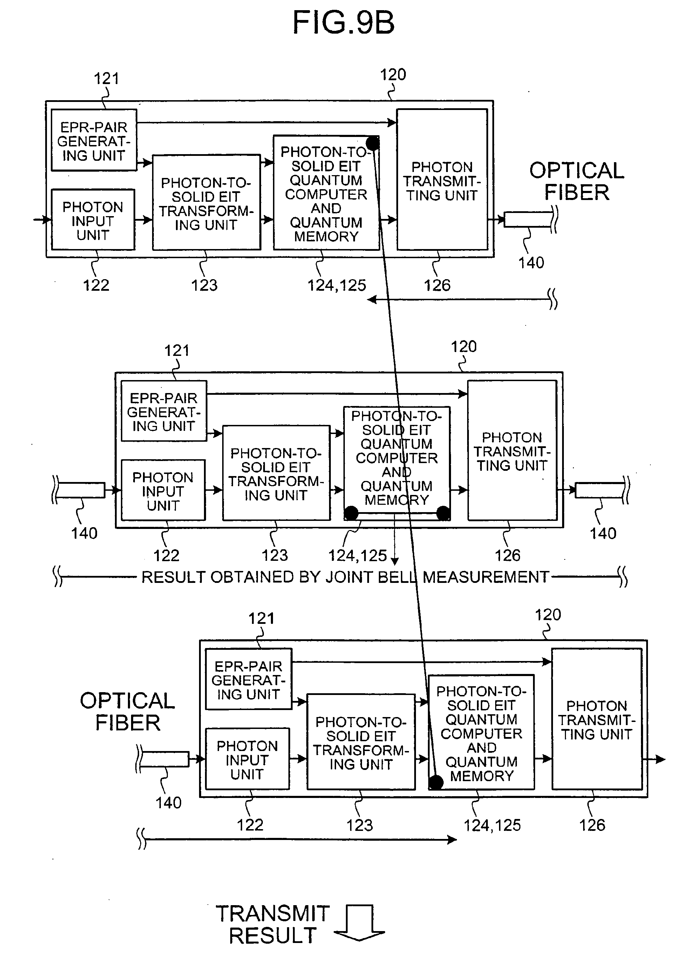

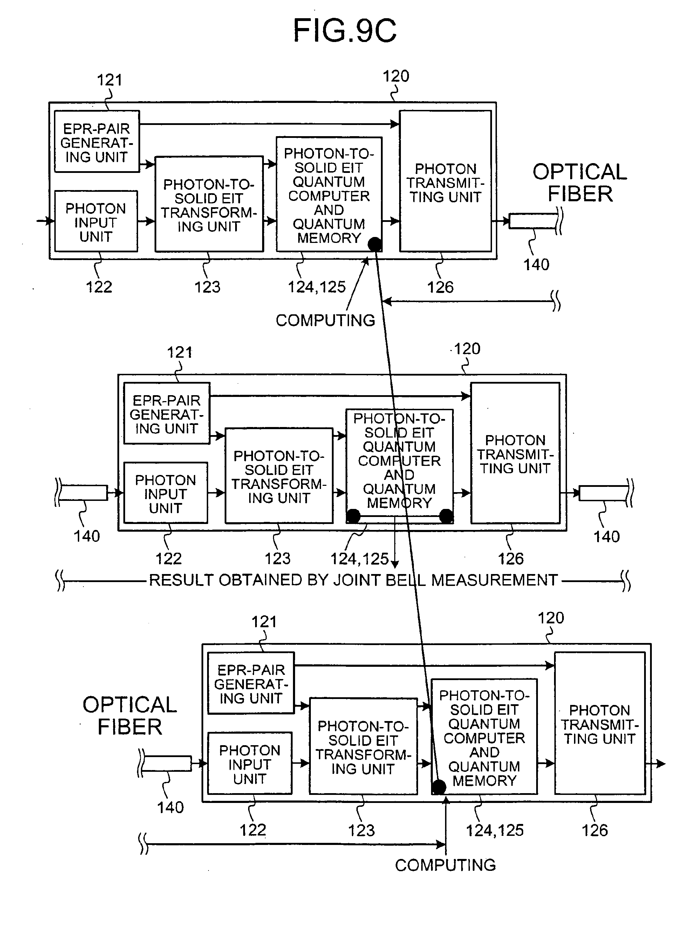

The quantum repeater apparatus 100 performs the ES process and the EPP process as described above. Figs. 7A and 7B are schematic diagrams for explaining photon states after generation of an EPR pair until transmission of a photon, which is one of photons of the EPR pair, to the adjacent quantum repeater apparatus 100. Figs. 8A and 8B are schematic diagrams for explaining a state in which the EPR pair is shared by the two quantum repeater apparatuses 100 as a result of the transmission of the photon. Figs. 9A to 9C are schematic diagrams for explaining a state in which the ES process is performed for the shared EPR pairs. As shown in Figs. 7 to 9, the two photons of the shared EPR pairs are stored in the quantum memory 125 of the photon-to-solid EIT quantum computer 124, and the photon-to-solid EIT quantum computer 124 (the ES unit 302 and the EPP unit 303) performs the ES process and the EPP process.

When performing a last EPP process, the EPP unit 303 selects a classical channel different from at least one of a classical channel used for a last ES process and a classical channel used for any one of EPP processes that have been performed before the last ES process, and performs the last EPP process via the selected classical channel. When performing the last ES process, the ES unit 302 selects a classical channel different from at least one of a classical channel used for any one of prior ES processes and a classical channel used for any one of prior EPP processes, and performs the last ES process via the selected channel.

The ES unit 302 selects a classical channel different from at least one of a classical channel used for any one of ES processes that have been performed before and a classical channel used for any one of EPP process that have been performed before, and performs a latest ES process via the selected channel.

To select a classical channel for the ES process and the EPP process, the control unit 301 determines a role, that is, via which classical channel the ES process or the EPP process are performed based on a position of its own node in the path.

More particularly, a first node performs a first ES process for an EPR pair shared with a second node that is a node adjacent to the first node and positioned at the transmitter node side. A first EPP process is performed by the second node and a third node that is a node adjacent to the first node and positioned at the receiver node side. After the first EPP process, a second ES process is performed by the third node, and a second EPP process is performed by the second node. The second EPP process is performed via a classical channel different from classical channels used for the first ES process, the first EPP process, and the second ES process. Each of the above nodes is the quantum repeater apparatus 100.

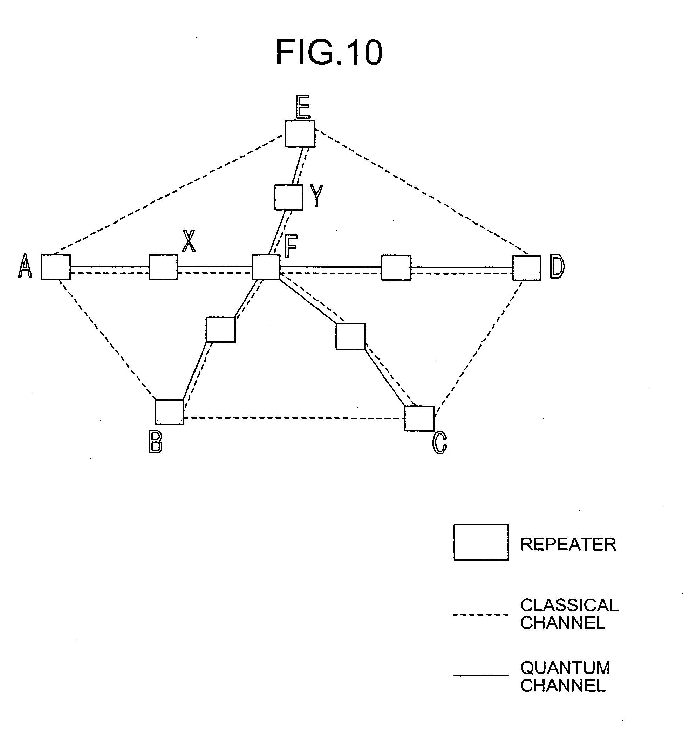

A quantum communication system and a quantum-information communication process performed by a plurality of the quantum repeater apparatuses 100 are described below. Fig. 10 is a schematic diagram for explaining an example of a network structure in which nodes A, B, C, D, E, F, X, and Y, each of which is the quantum repeater apparatus 100, are connected to each other and quantum channels are partially overlapped with classical channels. Solid lines indicate the quantum channels and dotted lines indicate the classical channels. The quantum channels are perfectly overlapped with the classical channels between the nodes A and X, X and F, F and D, F and Y, Y and E, and F and C. However, only classical channels exist between the nodes A and E, A and B, B and C, E and D, and C and D.

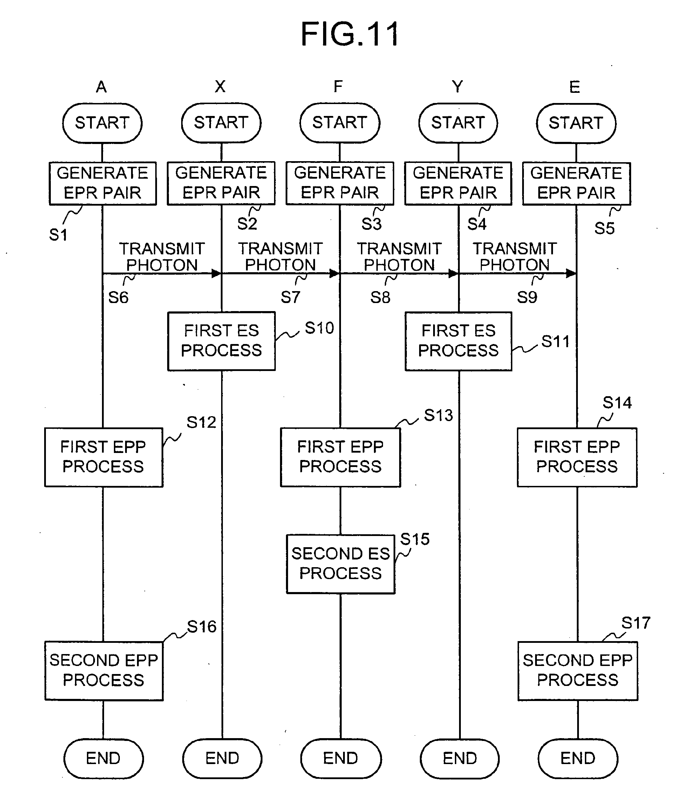

A case of the quantum communication process is described with reference to Fig. 11, in which quantum information is transmitted from the node A to the node E.

EPR pairs are generated at the nodes A, X, F, and Y (steps S1 to S5). A photon, which is one of photons of the EPR pair, is transmitted to the adjacent node (steps S6 to S9). As a result, the EPR pairs are shared by the nodes A and X, X and F, F and Y, and Y and E, respectively.

A first ES process is performed by the nodes X and Y (steps S10 and S11), so that the EPR pairs are shared by the nodes A and F and F and E.

A first EPP process between the nodes A and F is performed by the nodes A and F, and a first EPP process between the nodes F and E is performed by the nodes F and E (steps S12 to S14). As a result, the fidelity of the EPR pairs between the nodes A and F and between the nodes F and E is recovered.

A second ES process is performed by the node F (step S15), so that an EPR pair is shared by the nodes A and E.

Classical channels used for the above process are as follows. As shown in Figs. 10 and 11, paths A-X-F and F-Y-E are used as the classical channels for the first ES process. The paths A-X-F and F-Y-E are used for the first EPP process. The paths A-X-F and F-Y-E are also used for the second ES process.

A second EPP process between the nodes A and E is performed by the nodes A and E (steps S16 and S17), so that the fidelity of the EPR pair between the nodes A and E is recovered. In the second EPP process, a classical channel A-E, which is different from the classical channels used for the first ES process, the first EPP, and the second ES process, is used. In other words, a communication from the node A to the node E is made via the classical channel A-E, which is short and directly connects the nodes A and E without passing through the node F. This makes it possible to prevent attenuation of the fidelity of the EPR pair.

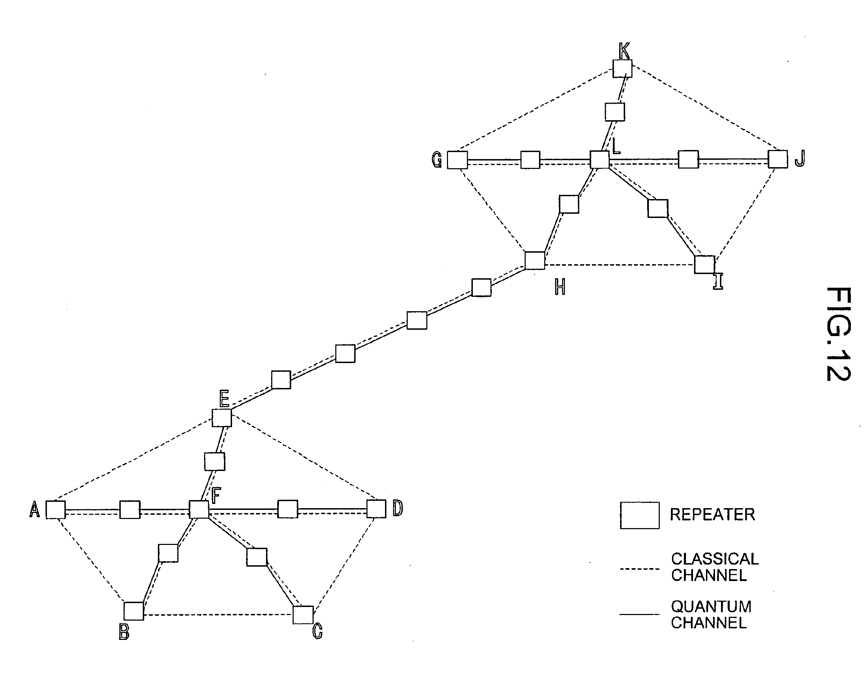

The above quantum communication process can be applied for a network made up of a block of network in which quantum channels are perfectly overlapped with classical channels and another block of a network in which quantum channels are partially overlapped with classical channels, specifically, for the latter block of network. Fig. 12 is a schematic diagram of an example of such a network. In the example, each of nodes A to L is the quantum repeater apparatus 100. The quantum channels are perfectly overlapped with the classical channel between the nodes E and K, while the quantum channels are not overlapped with the classical channels between the nodes A and E.

When quantum communication is made between the nodes A and K in the network of Fig. 12, the short classical channel A-E, which does not passing through the node F, is selected as a path from nodes A to E, by the similar process as described with reference to the example shown in Fig. 10. This makes it possible to prevent attenuation of the fidelity of the EPR pair.

With the quantum communication system described above, a classical channel which is different from a classical channel used for the ES process and a classical channel used for the previous EPP process is selected, and the EPP process is performed by the quantum repeater apparatuses 100 in the selected classical channel. As a result, it is possible to use a classical channel having a shorter distance to the receiver node, while maintaining fidelity of the quantum state and ensuring security.

A quantum communication system according to a second embodiment of the present invention includes a network management device 130 that determines a path, and makes a quantum communication via the short path determined by the network management device 130.

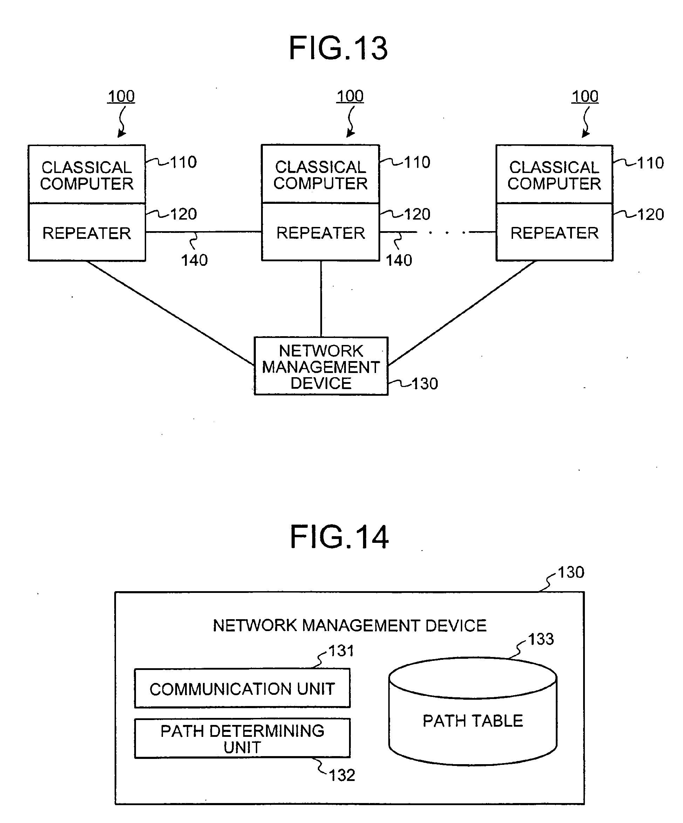

As shown in Fig. 13, the quantum communication system according to the second embodiment includes a plurality of the quantum repeater apparatuses 100 each of which acts as a node and the network management device 130, and the quantum repeater apparatuses 100 are each connected to the network management device 130 via the optical fiber 140.

A functional structure of the quantum repeater apparatuses 100 according to the second embodiment is identical to that according to the first embodiment. In addition, the quantum repeater apparatus 100 includes a communication unit (not shown) in the classical computer 110. When the quantum repeater apparatus 100 serves as a transmitter node, the communication unit transmits, to the network management device 130, a request message containing IP addresses of the transmitter node and a receiver node for requesting the network management device 130 to determine a path from the transmitter node to the receiver node, and receives path (a path for quantum channels and a path for classical channels) determined by the network management device 130.

The network management device 130, as shown in Fig. 14, includes a communication unit 131, a path determining unit 132, and a path table 133 that is stored in a recording medium such as a hard disk drive and a memory.

The communication unit 131 receives the request message for determining a path from the quantum repeater apparatus 100, and transmits a message containing the determined path (a path for quantum channels and a path for classical channels) to all nodes positioned in the determined path. Each of the nodes that receive the message containing the determined path determines its own role based on a position of itself in the path. Specifically, the control unit 301 of each node, similarly to that according to the first embodiment, determines its role, that is, via which classical channel the ES process and the EPP process are performed based on a position of its own node in the path to select a classical channel for the ES process and the EPP process.

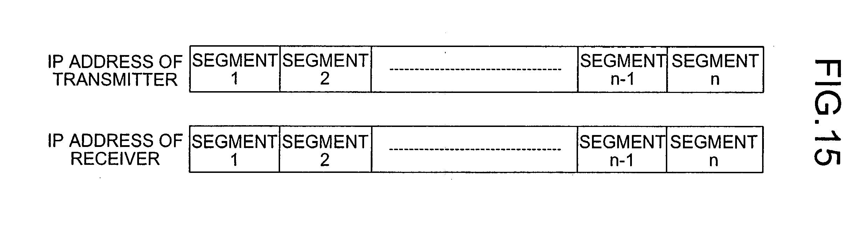

The path determining unit 132 determines the path for quantum channels and classical channels from the IP addresses of the transmitter node and the receiver node contained in the path determination request by referring to the path table 133. As shown in Fig. 15, the IP address is made up of a plurality of segments.

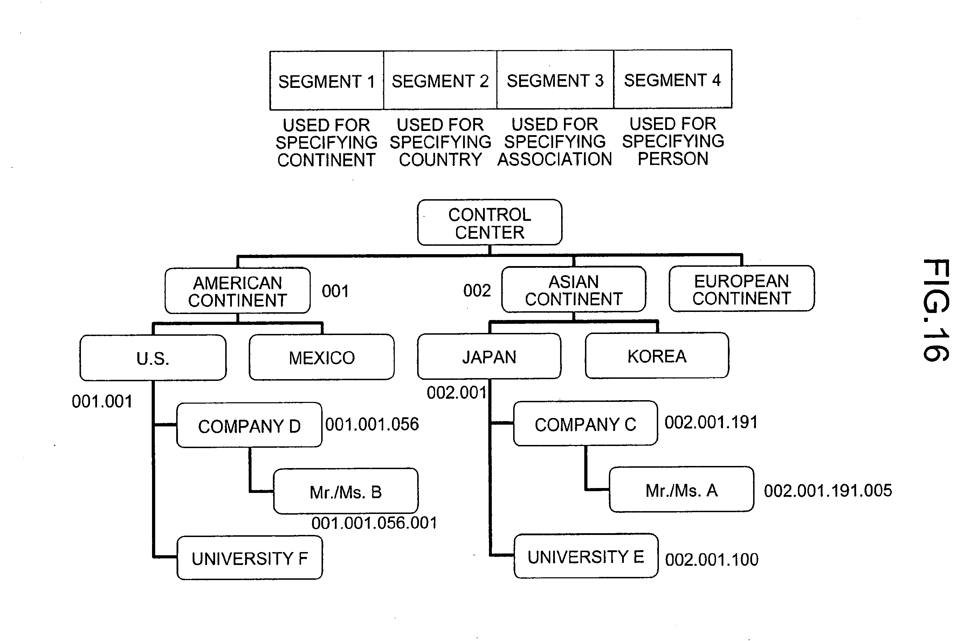

Each segment indicates a hierarchical level in the network. For example, when the IP address is made of n segments, m1 segments from the head are used to specify a first level, and next m2 segments are used to specify a second level. Segments from an {m1+ ... +m(i-1)+1}-th segment to an (m1+ ... +mi)-th segment are used to specify an i-th level. In an example shown in Fig. 16, the IP address is made up of four segments, and the four segments are used to specify a continent level, a country level, an association level, and a personal level, respectively from the upper to the lower segments. A tree diagram shown in the bottom half of Fig. 16 is an example of use.

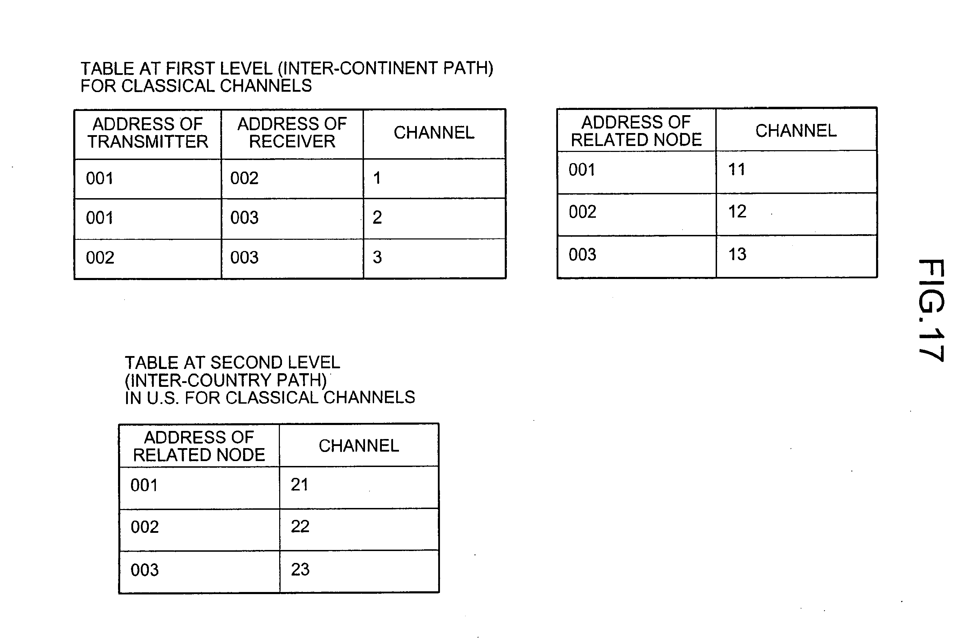

The path table 133 shown in Fig. 14 stores the shortest paths between any two of the nodes in the network. The path table 133 has a path table for classical channels and a path table for quantum channels, independently. Examples of the path table 133 shown in Fig. 17 are paths for classical channels at the first level (the continent level) and at the second level (the country level).

The path determining unit 132 determines a path for each level by referring to the path table 133. For example, the path determining unit 132 obtains the IP addresses of the transmitter node and the receiver node contained in the path determination request, and refers to, for example, the path table 133 shown in FIG. 17, for continent addresses 001 and 002, and determines a path at the first level. After that, the path determining unit 132 determines a path on the transmitter node side at the second level using a country address in the IP address of the transmitter node, and a path on the receiver node side at the second level using a country address in the IP address of the receiver node.

Moreover, the path determining unit 132 determines a path on the transmitter node side at the third level using an association address in the IP address of the transmitter node, and a path on the receiver node side at the third level using an association address in the IP address of the receiver node.

Still moreover, the path determining unit 132 determines a path on the transmitter node side at the fourth level using a personal address in the IP address of the transmitter node, and a path on the receiver node side at the fourth level using a personal address in the IP address of the receiver node. As described above, the path determining unit 132 determines the path from the transmitter node to the receiver node by determining the paths for respective levels and connecting the determined paths eventually. On determining the path for each level, the path determining unit 132 refers to the path table 133 in which addresses or address pairs are made to correspond to channels. The path tables are created for classical channels and for quantum channels independently, and a correspondent path table is referred to at the path determination.

Each of the nodes in the determined path determines its own role based on the path transmitted from the network management device 130, and the ES unit 302 and the EPP unit 303 of each of the nodes perform the ES process and the EPP process as described in the first embodiment. More particularly, in the example shown in Fig. 11, the transmitter node A transmits a path determination request to the network management device 130, and receives a response (determined path). Then, EPR pairs are generated at steps S1 to S5. A photon is transmitted to the adjacent node based on the received path (step S6), and the ES processes and the EPP processes are performed. The ES process, the EPP process, and other functions of the quantum repeater apparatus 100 are performed in a manner similar to the first embodiment.

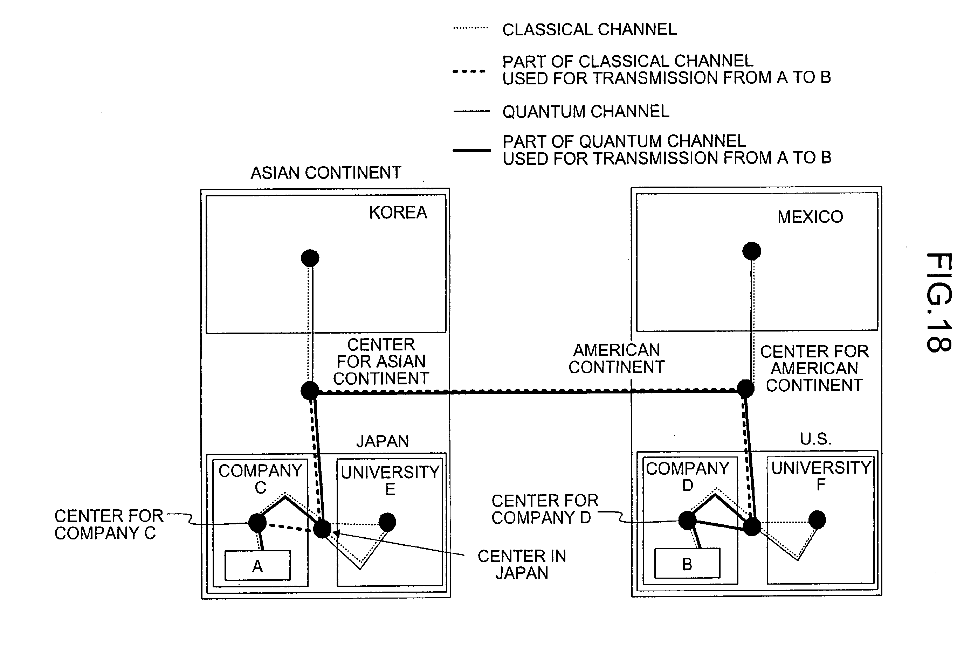

Fig. 18 is a schematic diagram for explaining an example of a path which is taken in a quantum communication process from the transmitter node A to the receiver node B based on path determination by the network management device 130 in the quantum communication system according to the second embodiment. A bold solid line indicates a portion of the quantum channel employed in a transmission path from the transmitter node A to the receiver node B, whereas a bold dotted line indicates a portion of the classic channel employed in a transmission path from the transmitter node A to the receiver node B.

The quantum communication system according to the second embodiment selects a classical channel different from classical channels used for the ES process and the prior EPP process based on a path determined by the network management device 130, and performs the EPP process with the quantum repeater apparatus 100 located in the selected classical channel. Therefore, it is possible to use the classical channel having a shorter distance to the receiver node, while maintaining fidelity of the quantum state and ensuring security.

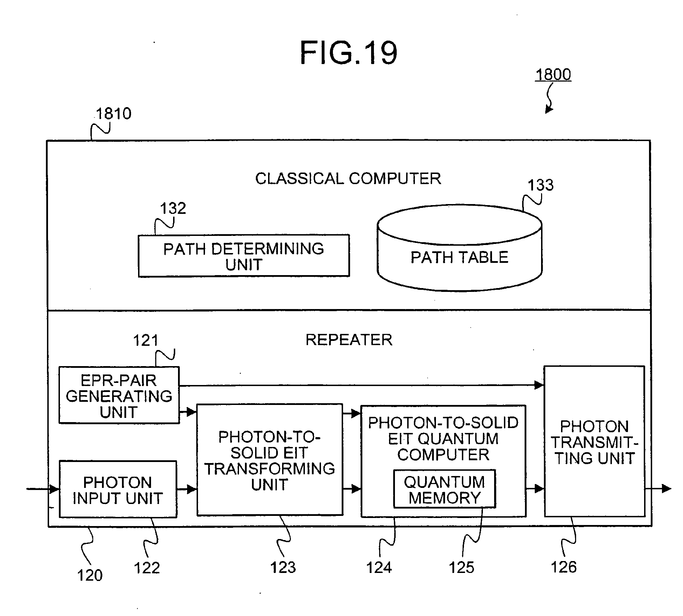

Although the network management device 130 determines a path from a transmitter node to a receiver node in the second embodiment, a unit which performs the path determination is not limited thereto. For example, as shown in Fig. 19, it is possible to provide the path determining unit 132 and the path table 133 in a classical computer 1810 of a quantum repeater apparatus 1800 that acts as the transmitter node, and have the transmitter node itself determine a path to the receiver node by referring to the path table 133 using the path determining unit 132.

A quantum repeater program executed by the quantum repeater apparatus 100 according to any one of the embodiments is provided in a state prestored in a recording medium such as a read only memory (ROM).

The quantum repeater program that is executed by the quantum repeater apparatus 100 according to the first and the second embodiments can be stored, in a form of a file installable and executable on a computer, in a computer-readable recording medium, such as a compact disk read only memory (CD-ROM), a flexible disk (FD), a compact disk recordable (CD-R), and a digital versatile disk (DVD).

Alternatively, the quantum repeater program may be stored in a computer connected to a network such as the Internet, and downloaded via the network. Still alternatively, the quantum repeater program can be delivered or distributed via a network such as the Internet.

The quantum repeater program is made up of modules including the above-described units (such as the ES unit, the EPP unit, and the control unit). As an actual hardware, when the CPU (processor) reads the quantum repeater program from the ROM and executes the read program, the above units are loaded on a main memory, and the ES unit, the EPP unit, and the control unit are created on the main memory.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1. A quantum communication system comprising:

   plural quantum repeater apparatuses (100) each as a node positioned in one of a classical channel and a quantum channel between a transmitter node and a receiver node, each of the apparatuses (100) including

   an EPR-pair generating unit (121) that generates an EPR (Einstein-Podolsky-Rosen) pair which is an entangled photon pair;
   a photon transmitting unit (126) that transmits one of photons of the EPR pair to an adjacent node to share the EPR pair with the adjacent node and extend a distance between photons of the EPR pair;
   an entanglement swapping unit (302) that performs an entanglement swapping process for increasing a length of the EPR pair; and
   an entanglement purification protocol unit (303) that performs an entanglement purification protocol process for recovering fidelity of the EPR pair, wherein

   the entanglement purification protocol unit (303) selects, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

2. The system according to claim 1, further comprising

   a path determining device (130) including

   a storage unit that stores therein path information (133) from the transmitter node to the receiver node;
   a path determining unit (132) that determines a path from the transmitter node to the receiver node based on the path information (133) in response to a request from the quantum- repeater apparatus (100) which serves as the transmitter node, and

   a path transmitting unit (131) that transmits the path to the quantum repeater apparatus (100) which serves as the transmitter node, wherein
   the quantum repeater apparatus (100) further includes

   a communication unit that, when the quantum repeater apparatus (100) serves as the transmitter node, sends a request to the path determining device (130) for a path from the transmitter node to the receiver node, and receives a path determined by the path determining device, and
   the entanglement swapping unit (302) performs the entanglement swapping process with another node based on the path determined by the path determining device.

3. A quantum repeater apparatus (100) serving as a node positioned in one of a classical channel and a quantum channel between a transmitter node and a receiver node, the apparatus (100) comprising:

an EPR-pair generating unit (121) that generates an EPR (Einstein-Podolsky-Rosen) pair which is an entangled photon pair;
a photon transmitting unit that (126) transmits one of photons of the EPR pair to an adjacent node to share the EPR pair with the adjacent node and extend a distance between photons of the EPR pair;
an entanglement swapping unit that (302) performs an entanglement swapping process for increasing a length of the EPR pair; and
an entanglement purification protocol unit (303) that performs an entanglement purification protocol process for recovering fidelity of the EPR pair, wherein
the entanglement purification protocol unit (303) selects, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

4. The apparatus according to claim 3, wherein the entanglement swapping unit (302) selects, when performing a last entanglement swapping process, a classical channel different from at least one of a classical channel used for any one of entanglement swapping processes that have been performed before, and a classical channel used for any one of entanglement purification protocol processes that have been performed before.

5. The apparatus according to claim 3, further comprising:

a storage unit that stores therein path information (133) from the transmitter node to the receiver node; and
a path determining unit (132) that determines a path from the transmitter node to the receiver node based on the path information, wherein
the entanglement swapping unit (302) performs the entanglement swapping process with another node based on the path determined.

6. A method for performing quantum repeater process, the method comprising:

generating an EPR (Einstein-Podolsky-Rosen) pair which is an entangled photon pair;
transmitting one of photons of the EPR pair to an adjacent node to sharing the EPR pair with the adjacent node and extend a distance between photons in the EPR pair;
performing an entanglement swapping process for increasing a length of the EPR pair; and
performing an entanglement purification protocol for recovering fidelity of the EPR pair, wherein
the performing the entanglement purification protocol includes selecting, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

7. A computer program product having a computer readable recording medium including programmed instructions for performing quantum repeater process, wherein the instructions, when executed by a computer, cause the computer to perform:

generating an EPR (Einstein-Podolsky-Rosen) pair which is an entangled photon pair;
transmitting one of photons of the EPR pair to an adjacent node to sharing the EPR pair with the adjacent node and extend a distance between photons in the EPR pair;
performing an entanglement swapping process for increasing a length of the EPR pair; and
performing an entanglement purification protocol for recovering fidelity of the EPR pair, wherein
the performing the entanglement purification protocol includes selecting, when performing a last entanglement purification protocol process, a classical channel different from at least one of a classical channel used for a last entanglement swapping process and used for any one of entanglement swapping processes that have been performed before the last entanglement swapping process, and a classical channel used for any one of entanglement purification protocol processes that have been performed before.

# FIG.1

| 100 | 100 | 100 |
|---|---|---|
| CLASSICAL COMPUTER ∿ 110 | CLASSICAL COMPUTER ∿ 110 | CLASSICAL COMPUTER ∿ 110 |
| REPEATER ∿ 120 | REPEATER ∿ 120 | REPEATER ∿ 120 |

140          140

# FIG.2

120

REPEATER

121

EPR-PAIR GENERATING UNIT

PHOTON INPUT UNIT

PHOTON-TO-SOLID EIT TRANSFORMING UNIT

PHOTON-TO-SOLID EIT QUANTUM COMPUTER

QUANTUM MEMORY

PHOTON TRANSMIT-TING UNIT

122          123          124          125          126

# FIG.3

124

PHOTON-TO-SOLID EIT QUANTUM COMPUTER

CONTROL UNIT ∿ 301

ES UNIT ∿ 302

EPP UNIT ∿ 303

# FIG.4

# FIG.5

PHOTON 1    PHOTON 2    PHOTON 4

PHOTON 3

PHOTON 1    PHOTON 2    PHOTON 5

# FIG.6

TRANSMITTER    RECEIVER

CNOT    CNOT

TRANSMITTER    RECEIVER

MEASUREMENT    MEASUREMENT

# FIG.7A

# FIG.7B

# FIG.8A

# FIG.8B

# FIG.9A

# FIG.9B

# FIG.9C

# FIG.10

REPEATER

------ CLASSICAL CHANNEL

_____ QUANTUM CHANNEL

# FIG.11

# FIG.12

# FIG.13

# FIG.14

FIG.15

| IP ADDRESS OF TRANSMITTER | SEGMENT 1 | SEGMENT 2 | ------------------- | SEGMENT n-1 | SEGMENT n |

| IP ADDRESS OF RECEIVER | SEGMENT 1 | SEGMENT 2 | ------------------- | SEGMENT n-1 | SEGMENT n |

| SEGMENT 1 | SEGMENT 2 | SEGMENT 3 | SEGMENT 4 |
|---|---|---|---|
| USED FOR SPECIFYING CONTINENT | USED FOR SPECIFYING COUNTRY | USED FOR SPECIFYING ASSOCIATION | USED FOR SPECIFYING PERSON |

CONTROL CENTER

AMERICAN CONTINENT    001

002    ASIAN CONTINENT

EUROPEAN CONTINENT

U.S.

MEXICO

JAPAN

KOREA

001.001

COMPANY D    001.001.056

Mr./Ms. B

001.001.056.001

UNIVERSITY F

002.001

COMPANY C    002.001.191

Mr./Ms. A    002.001.191.005

UNIVERSITY E    002.001.100

FIG.16

# FIG.17

| ADDRESS OF RELATED NODE | CHANNEL |
|---|---|
| 001 | 11 |
| 002 | 12 |
| 003 | 13 |

TABLE AT FIRST LEVEL (INTER-CONTINENT PATH) FOR CLASSICAL CHANNELS

| ADDRESS OF TRANSMITTER | ADDRESS OF RECEIVER | CHANNEL |
|---|---|---|
| 001 | 002 | 1 |
| 001 | 003 | 2 |
| 002 | 003 | 3 |

TABLE AT SECOND LEVEL (INTER-COUNTRY PATH) IN U.S. FOR CLASSICAL CHANNELS

| ADDRESS OF RELATED NODE | CHANNEL |
|---|---|
| 001 | 21 |
| 002 | 22 |
| 003 | 23 |

CLASSICAL CHANNEL

PART OF CLASSICAL CHANNEL
USED FOR TRANSMISSION FROM A TO B

QUANTUM CHANNEL

PART OF QUANTUM CHANNEL
USED FOR TRANSMISSION FROM A TO B

ASIAN CONTINENT

KOREA

MEXICO

CENTER
FOR ASIAN
CONTINENT

AMERICAN
CONTINENT

CENTER FOR
AMERICAN
CONTINENT

JAPAN

U.S.

COMPANY
C

UNIVERSITY
E

COMPANY
D

UNIVERSITY
F

CENTER FOR
COMPANY C

CENTER FOR
COMPANY D

A

B

CENTER IN
JAPAN

FIG.18

EP 1 865 657 A1

29

# FIG.19

1800

1810

CLASSICAL COMPUTER

133

132

| PATH DETERMINING UNIT | PATH TABLE |

121

REPEATER

| EPR-PAIR GENERATING UNIT | | | | | PHOTON TRANSMIT-TING UNIT |

| PHOTON INPUT UNIT | PHOTON-TO-SOLID EIT TRANSFORMING UNIT | PHOTON-TO-SOLID EIT QUANTUM COMPUTER | |
| | | QUANTUM MEMORY | |

120  122     123      124   125      126

**European Patent Office**

## EUROPEAN SEARCH REPORT

Application Number

EP 07 25 2321

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | GRASSL M: "Methods of quantum error correction" CIRCUITS AND SYSTEMS, 2000. PROCEEDINGS. ISCAS 2000 GENEVA. THE 2000 IEEE INTERNATIONAL SYMPOSIUM ON MAY 28-31, 2000, PISCATAWAY, NJ, USA,IEEE, vol. 1, 2000, pages I740-I743, XP010503305 ISBN: 0-7803-5482-6 * the whole document * | 1-7 | INV. H04L9/08 |
| A | WU XIANG-SHENG ET AL: "Memory-based quantum repeater in quantum information communication" CHINESE PHYSICS, INSTITUTE OF PHYSICS PUBLISHING, BRISTOL, US, vol. 13, no. 2, 1 February 2004 (2004-02-01), pages 173-177, XP020074905 ISSN: 1009-1963 * the whole document * | 1-7 | |
| A | BENNETT C H ET AL: "Teleporting an unknown quantum state via dual classical and Einstein-Podolsky-Rosen channels" PHYSICAL REVIEW LETTERS, AMERICAN PHYSICAL SOCIETY, NEW YORK, US, vol. 70, no. 13, 29 March 1993 (1993-03-29), pages 1895-1899, XP002342855 ISSN: 0031-9007 * the whole document * | 1-7 | TECHNICAL FIELDS SEARCHED (IPC) H04L |

-/--

The present search report has been drawn up for all claims

| Place of search | Date of completion of the search | Examiner |
|---|---|---|
| Munich | 11 October 2007 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 07 25 2321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHOU ET AL: "Cross-center quantum identification scheme based on teleportation and entanglement swapping" OPTICS COMMUNICATIONS, NORTH-HOLLAND PUBLISHING CO. AMSTERDAM, NL, vol. 254, no. 4-6, 15 October 2005 (2005-10-15), pages 380-388, XP005086149 ISSN: 0030-4018 * the whole document * ----- | 1-7 | |
| A | US 2005/111665 A1 (ICHIMURA KOUICHI [JP] ET AL) 26 May 2005 (2005-05-26) * the whole document * ----- | 1-7 | |

TECHNICAL FIELDS SEARCHED (IPC)

The present search report has been drawn up for all claims

| Place of search | Date of completion of the search | Examiner |
|---|---|---|
| Munich | 11 October 2007 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 2321

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2007

| Patent document cited in search report | Publication date | Patent family member(s) | Publication date |
|---|---|---|---|
| US 2005111665 A1 | 26-05-2005 | JP 2005136721 A | 26-05-2005 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006161443 A

### Non-patent literature cited in the description

- **H.J. BRIEGEL et al.** Quantum repeaters: The role of imperfect local operations in quantum communication. *Phys. Rev. Lett.,* 1998, vol. 81 (26), 5932-5935
- **R. M. STEVENSON ; R. J. YOUNG ; P. ATKINSON ; K. COOPER ; D. A. RITCHIE ; A. J. SHIELDS.** A semiconductor source of triggered entangled photon pairs. *Nature,* 2006, vol. 439, 179-182
- **K. ICHIMURA.** A simple frequency-domain quantum computer with ions in a crystal coupled to a cavity mode. *Optics communications,* 2001, vol. 196, 119-125
- **H. GOTO ; K. ICHIMURA.** Multiqubit controlled unitary gate by adiabatic passage with an optical cavity. *Phys. Rev. A,* 2004, vol. 70, 012305
- **C. H. BENNETT et al.** Purification of noisy entanglement and faithful teleportation via noisy channels. *Phys. Rev. Lett.,* 1996, vol. 76 (5), 722-725
- **R. MATSUMOTO.** Conversion of a general quantum stabilizer code to an entanglement distillation protocol. *quant-ph/0209091,* 2002
- **P. W. SHOR ; J. PRESKILL.** Simple proof of security of the BB84 quantum key distribution protocol. *e-print, quant-ph/003004,* 2000